(19) Europäisches Patentamt
European Patent Office
Office européen des brevets

(11) **EP 1 939 481 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(51) Int Cl.:
***F16D 48/06*** *(2006.01)*

(21) Anmeldenummer: **07024185.6**

(22) Anmeldetag: **13.12.2007**

(54) **Verfahren und Vorrichtung zum Absichern einer Referenzierung einer Inkrementalwegmessung bei einer Kupplungsaktorik**

Method and device for ensuring the referencing of an incremental measurement in a coupling actuator

Procédé et dispositif destinés à assurer un référencement d'une mesure de trajectoire incrémentielle dans un système d'actionneur d'embrayage

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **27.12.2006 DE 102006061547**

(43) Veröffentlichungstag der Anmeldung:
**02.07.2008 Patentblatt 2008/27**

(73) Patentinhaber: **Schaeffler Technologies GmbH & Co. KG**
**91074 Herzogenaurach (DE)**

(72) Erfinder: **Berger, Reinhard, Dr.**
**77815 Bühl (DE)**

(56) Entgegenhaltungen:
**EP-A1- 1 650 458      EP-A2- 1 450 062**
**EP-A2- 1 614 922      WO-A2-03/008779**
**DE-A1- 10 313 483     DE-A1- 19 953 292**
**GB-A- 2 310 261**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zum Absichern einer Referenzierung einer Inkrementalwegmessung bei einer in einem Fahrzeugantriebsstrang enthaltenen Kupplungsaktorik.

In Fahrzeugantriebssträngen finden selbsttätig in Abhängigkeit von Betriebsparametern des Antriebstrangs schaltende Schaltgetriebe insbesondere aus Gründen der Verbrauchsminderung zunehmend Verwendung.

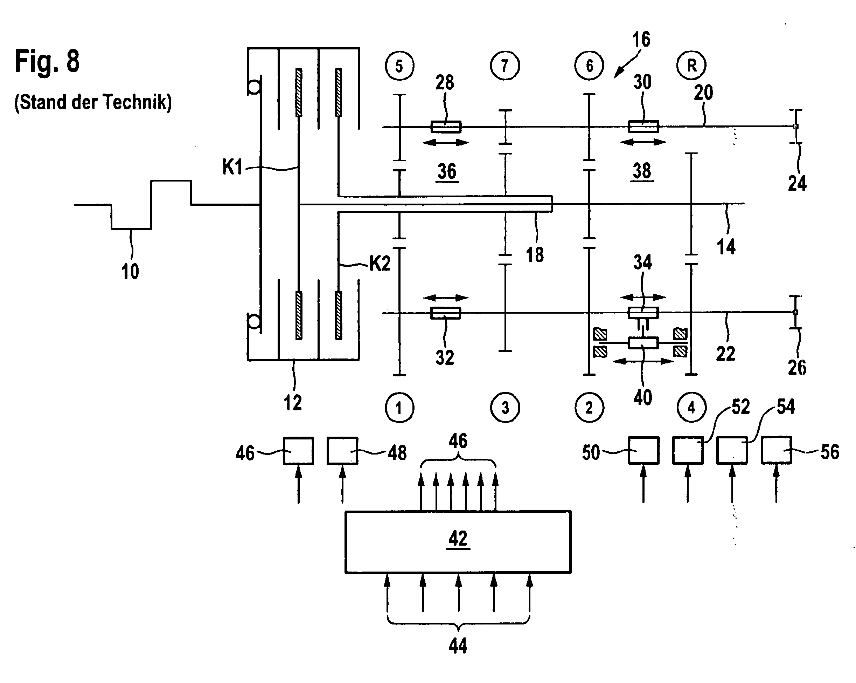

Figur 8 zeigt einen solchen an sich bekannten automatisierten Fahrzeugantriebsstrang mit einem Doppelkupplungs- bzw. Parallelschaltgetriebe:

Die Kurbelwelle 10 eines beispielsweise als Brennkraftmaschine ausgebildeten Antriebsmotors des Fahrzeugs ist mit einem Gehäuse einer Doppelkupplung 12 verbunden, die zwei getrennt voneinander betätigbare Kupplungen K1 und K2 enthält. Mittels der Kupplung K1 kann die Kurbelwelle 10 mit einer ersten Eingangswelle 14 eines insgesamt mit 16 bezeichneten Doppelkupplungsgetriebes gekuppelt werden. Mittels der Kupplung K2 kann die Kurbelwelle 10 mit einer zweiten Eingangswelle 18 des Doppelkupplungsgetriebes 16 gekuppelt werden. Die zweite Eingangswelle 18 ist hohl und die erste Eingangswelle 14 erstreckt sich durch die zweite Eingangswelle 18 hindurch.

Mit jeder der Eingangswellen 14 und 18 sind Zahnräder drehfest verbunden, die mit Zahnrädern kämmen, die auf parallel zu den Eingangswellen 14 und 18 angeordneten Ausgangswellen 20 und 22 axial fest, jedoch drehbar gelagert sind. Mit jeder der Ausgangswellen 20 und 22 ist starr ein Ausgangsritzel 24 bzw. 26 verbunden, das gegebenenfalls über Zwischenübersetzungen auf eine Antriebswelle zum Antreiben wenigstens eines Fahrzeugrades wirkt.

Die auf den Ausgangswellen 20 bzw. 22 gelagerten Zahnräder können jeweils über Schaltmuffen 28, 30, 32 und 34 drehfest mit der jeweiligen Ausgangswelle gekuppelt werden. Durch die drehfeste Kupplung eines auf einer Ausgangswelle gelagerten Zahnrades mit der jeweiligen Ausgangswelle werden Gänge geschaltet, die in Figur 8 mit 1, 2, 3, 4, 5, 6, 7 und R bezeichnet sind. Der Einfachheit halber sind Zahnradpaarungen zum Schalten des Rückwärtsganges R nicht eingezeichnet.

Die mit der zweiten Eingangswelle 18 drehfest verbundenen Zahnräder bilden zusammen mit den mit ihnen kämmenden Zahnrädern der Ausgangswellen ein erstes Teilgetriebe 36, mit dem die ungeraden Gänge geschaltet werden. Die mit der ersten Ausgangswelle 14 drehfest verbundenen Zahnräder bilden zusammen mit den jeweiligen Gegenzahnrädern ein zweites Teilgetriebe 38, mit dem die geraden Gänge und der Rückwärtsgang geschaltet werden.

Zum Bewegen einer Schaltmuffe längs der zugehörigen Ausgangswelle sind parallel zur Bewegbarkeit der Schaltmuffen beweglich geführte Schaltschienen vorgesehen, die beispielsweise über doppelt wirkende Schaltzylinder hin und her bewegbar sind. In Figur 8 ist die der Schaltmuffe 34 zugeordnete Schaltschiene mit 40 bezeichnet.

Die Steuerung des Doppelkupplungsgetriebes 16 erfolgt mit Hilfe einer elektronischen Steuereinrichtung 42, deren Eingänge 44 mit nicht dargestellten Sensoren zur Erfassung von für den Betrieb des Doppelkupplungsgetriebes maßgeblichen Betriebsparametern verbunden sind. Ausgänge der Steuereinrichtung 42 sind mit einer Kupplungsaktorik 46, 48 zum Betätigen der Kupplungen K1 und K2 sowie einer Schaltaktorik 50, 52, 54 und 56 zum Betätigen jeweils einer Schaltschiene verbunden.

Aufbau und Funktion des beschriebenen Doppelkupplungsgetriebes, das vielfältig abgewandelt werden kann, sind an sich bekannt und werden daher nicht näher erläutert.

Die Kupplungsaktoren 46 bzw. 48 enthalten beispielsweise einen Elektromotor, dessen Drehung in eine Bewegung eines Kupplungshebels umgesetzt wird, mit dem das Drehmomentübertragungsvermögen der Kupplung eingestellt wird. Eine genaue Kenntnis des Drehmomentübertragungsvermögens der Kupplung und damit der Stellung des Kupplungshebels ist für eine genaue Steuerung bzw. Regelung des Anfahrens und von Schaltvorgängen wichtig.

Insbesondere wenn der Kupplungsaktor durch einen Elektromotor gebildet ist, wird die Drehung einer Welle des Elektromotors, entsprechend der ein mit dem Kupplungshebel bewegungsübertragend verbundenes Betätigungsglied bewegt wird, von einem Inkrementsensor erfasst. Mit einem solchen Inkrementsensor können keine Absolutstellungen des Betätigungsgliedes erfasst werden, sondern nur Stellungsänderungen, so dass es erforderlich ist, die Absolutstellung des Betätigungsgliedes bzw. die Drehstellung der Ausgangswelle des Elektromotors über eine Referenzierung zu ermitteln und beispielsweise nach einem Reset oder im Laufe von auftretendem Verschleiß zu aktualisieren.

Aus der DE 44 33 825 C2 ist eine Stelleinrichtung für eine Kraftfahrzeug-Reibungskupplung bekannt, bei der die Ausgangswelle eines Elektromotors ein Segmentzahnrad antreibt, an dem ein Betätigungsglied für die Kupplung gelagert ist. Der Verdrehbereich des Segmentzahnrades ist durch Anschläge begrenzt, die zum Referenzieren angefahren werden können. Auf diese Weise kann die Absolutstellung des Betätigungsgliedes ermittelt werden, von der aus der Verstellweg mittels eines Inkrementzählers erfasst werden kann.

Aus der DE 100 27 330 A1 ist eine Vorrichtung zum Schalten eines Getriebes bekannt, bei der ein Elektromotor, dessen Drehstellung mittels eines Inkrementsensors erfasst wird, ein Betätigungsglied des Getriebes antreibt, das in einer Endstellung gegen einen Anschlag bewegt werden kann. Das Betätigungsglied ist zusätzlich mit einer Oberflächenprofilierung versehen, in die ein Feder belastetes Abtastbauteil eingreift. Die Profilierung des Betätigungsgliedes ist derart, dass die zum Verstellen des Betätigungselements erforderliche Kraft von der Relativstellung zwischen der Oberflächenprofilierung und dem Abtastbauteil abhängt. Die Steilheit von Formflächen der Profilierung kann derart sein, dass die durch elastische Vorspannung des Abtastbauteils auf das Betätigungsglied aufgebrachte Kraft in Teilbereichen größer ist als das Haltemoment des Elektromotors, so dass bei geringer Spannungsbeaufschlagung des Elektromotors ermittelt werden kann, ob sich das Betätigungsglied in einem vorbestimmten Stellbereich befindet.

Dokument EP 1 614 922 A2 offenbart ein Verfahren zum Referenzieren eines Inkrementalwegsensors in einer elektronisch gesteuerten Betätigungsvorrichtung einer Kupplung im Antriebsstrang eines fahrenden Fahrzeugs, wobei das Steuergerät einen Speicher enthält, in dem eine Kennlinie abgespeichert ist, die das Kupplungsmoment abhängig von der Stellung eines Betätigungselements angibt, und unter anderem folgende Schritte enthält: Bestimmen, ob die Kupplung überschwellig schlupft; falls ja, Bestimmen des aktuellen Kupplungsmoments und Bestimmen der aktuellen Stellung des Betätigungselements aus dem aktuellen Kupplungsmoment und der Kennlinie.

Dokument GB 2 310 261 A offenbart ein Verfahren zur Funktionsüberprüfung eines Aktuators einer automatisierten Kupplung. Dazu wird der Strombedarf des Aktuatormotors bestimmt und bei Überschreiten eines Grenzwerts auf ein Steckenbleiben des Aktuators geschlossen, während bei Unterschreiten eines unteren Grenzwerts auf einen Bruch mechanischer Komponenten geschlossen wird.

Dokument WO 03/008779 A2 offenbart ein Verfahren zur Diagnose einer Wegmesseinrichtung beispielsweise in einem Kupplungs- oder Getriebeaktuator. Dabei ist vorgesehen, dass das beweglich angeordnete Bauteil, dessen Stellung bzw. Stellungsänderung im Normalbetrieb von der Wegmesseinrichtung überwacht wird, im Rahmen der Diagnoseroutine zwischen zwei Extremstellungen wenigstens einmal hin und her bewegt wird. Die beiden Extremstellungen können Endanschläge beispielsweise einer Wähl- oder einer Ganggasse in einem automatisierten Getriebe sein.

Referenzierungen, die dadurch erfolgen, dass ein Betätigungsglied gegen einen Anschlag bewegt wird und die durch Plausibilisierungsroutinen abgesichert werden, indem nach der eigentlichen Referenzierung Lastprofile beispielsweise eines Elektromotors aufgenommen werden, sind toleranzanfällig und stellen unter Umständen Beschränkungen für die Hardware-Auslegung der Kupplungsaktorik dar.

Der Erfindung liegt die Aufgabe zugrunde, ein Verfahren und eine Vorrichtung zum Absichern einer Referenzierung einer Inkrementalwegmessung bei einer in einem Fahrzeugantriebsstrang enthaltenen Kupplungsaktorik anzugeben, bei dem bzw. der ein hohes Maß an Sicherheit der Referenzierung erzielt wird.

Die vorgenannte Aufgabe wird mit den Merkmalen der beigefügten unabhängigen Ansprüche gelöst.

Die jeweiligen Unteransprüche sind auf vorteilhafte Durchführungsformen bzw. Ausführungsformen und Weiterbildungen des erfindungsgemäßen Verfahrens bzw. der erfindungsgemäßen Vorrichtung gerichtet.

Erfindungsgemäß wird bei einem Verfahren zum Absichern einer Referenzierung einer Inkrementalwegmessung bei einer in einem Fahrzeugantriebsstrang enthaltenen Kupplungsaktorik bei nach einer Referenzierung in einer vorbestimmten Stellung befindlicher Kupplungsaktorik eine Getriebeaktorik zum Schalten eines in dem Antriebsstrang enthaltenen Schaltgetriebes in vorbestimmter Weise betätigt und aus einer auf eine Referenzierung folgenden Betätigung der Getriebeaktorik oder einer auf eine Referenzierung folgenden Betätigung der Kupplungsaktorik die Referenzierung als einwandfrei oder fehlerhaft klassifiziert.

Bei einer Durchführungsform des erfindungsgemäßen Verfahrens wird die Kupplungsaktorik zum Referenzieren in eine dem voll geöffneten Zustand der Kupplung entsprechende Stellung bewegt, mittels der Getriebeaktorik ein Gang eingelegt und die Einlegbarkeit des Ganges als einwandfreie Referenzierung gewertet.

Bei der vorgenannten Durchführungsform wird vorteilhafterweise beim Einlegen des Ganges überprüft, ob sich die Eingangswelle des Getriebes mit einer der Übersetzung des eingelegten Ganges entsprechenden Drehzahl dreht.

Bei einer weiteren Durchführungsform des erfindungsgemäßen Verfahrens wird die Kupplungsaktorik zum Referenzieren in eine dem voll geöffneten Zustand der Kupplung entsprechende Stellung bewegt und nachfolgend überprüft, ob ein eingelegter Gang ausgelegt werden kann und die Auslegbarkeit des Ganges als einwandfreie Referenzierung gewertet.

Bevorzugt wird bei der vorgenannten Durchführungsform, nach dem Auslegen des Ganges die Kupplungsaktorik derart betätigt, dass sie einen vorbestimmten maximalen Verfahrweg durchfährt und das Vorhandensein dieses maximalen Verfahrweges als einwandfreie Referenzierung gewertet.

Bei einem weiteren erfindungsgemäßen Verfahren zum Absichern einer Referenzierung einer Inkrementalwegmessung bei einer in einem Fahrzeugantriebsstrang enthaltenen Kupplungsaktorik, wobei die Kupplungsaktorik und die Kupplung derart ausgebildet sind, dass im voll geöffneten Zustand der Kupplung von der Kupplungsaktorik über eine vorbestimmte Strecke auf die Kupplung eine unterhalb eines vorbestimmten Wertes liegende Schwellkraft ausgeübt wird, wird die Kupplungsaktorik zum Referenzieren in eine dem voll geöffneten Zustand der Kupplung entsprechende Stellung bewegt und anschließend überprüft, ob die Kupplungsaktorik über die vorbestimmte Strecke bewegbar ist, ohne dass die Schwellkraft überschritten wird, und die Bewegbarkeit der Kupplungsaktorik über die vorbestimmte Strecke ohne Überschreiten der Schwellkraft als einwandfreie Referenzierung gewertet.

Bei einer erfindungsgemäßen Vorrichtung zum Absichern einer Referenzierung einer Inkrementalwegmessung bei einer in einem Fahrzeugantriebsstrang enthaltenen Kupplungsaktorik, welcher Fahrzeugantriebsstrang einen Antriebsmotor, ein von einer Getriebeaktorik betätigbares Schaltgetriebe, eine zwischen dem Antriebsmotor und dem Getriebe angeordnete, von der Kupplungsaktorik betätigte Kupplung und eine elektronische Steuereinrichtung enthält, die die Kupplungsaktorik und die Getriebeaktorik in Abhängigkeit von von Sensoren erfassten Betriebsparametern des Antriebsstrangs steuert, steuert die Steuereinrichtung die Kupplungsaktorik und die Getriebeaktorik entsprechend einem der vorgenannten Verfahren.

Die Kupplungsaktorik kann einen Betätigungshebel enthalten, der um ein von einem Aktor bewegbares Stützglied schwenkbar ist und von einer Feder in Anlage an das Stützglied und ein Betätigungselement der Kupplung gedrängt wird.

Das Stützglied ist vorteilhaft linear etwa in Längsrichtung des Betätigungshebels bewegbar und der Betätigungshebel ist in seiner Längsrichtung unterschiedlich zur Bewegbarkeitsrichtung des Stützgliedes geneigt.

Die Kupplung kann als eine sich selbsttätig öffnende Kupplung ausgebildet sein.

Die Erfindung ist besonders vorteilhafterweise für Kupplungen einsetzbar, die jeweils eine der beiden Kupplungen eines Doppelkupplungsgetriebes sind, wobei das der Kupplung zugeordnete Getriebe jeweils eines von zwei Teilgetrieben des Doppelkupplungsgetriebes ist.

Die Erfindung wird im Folgenden anhand schematischer Zeichnungen beispielsweise und mit weiteren Einzelheiten erläutert.

In den Figuren stellen dar:

Figur 1    einen Halblängsschnitt durch eine Doppelkupplung;

Figur 2    eine Prinzipdarstellung von Teilen der Figur 1;

Figur 3    eine Kraftwegkennlinie einer Kupplungsaktorik;

Figur 4    eine Kupplungsmoment-Wegkennlinie;

Figur 5    ein Flussdiagramm zur Erläuterung eines erfindungsgemäßen Verfahrens;

Figur 6    ein Flussdiagramm einer weiteren Durchführungsform eines erfindungsgemäßen Verfahrens;

Figur 7    eine Kraftwegkennlinie einer weiteren Ausführungsform einer Kupplungsaktorik und

Figur 8    ein bereits erläutertes Schema eines an sich bekannten Doppelkupplungsgetriebes.

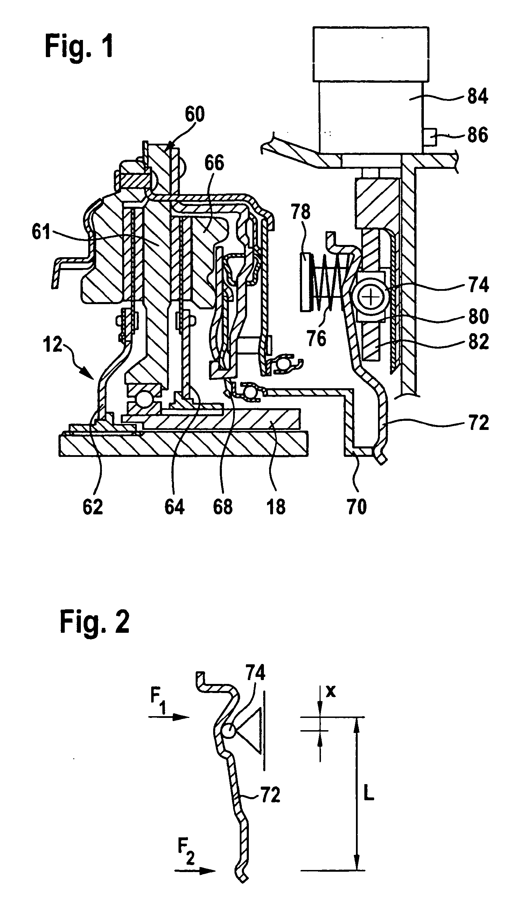

Gemäß Figur 1 enthält eine Doppelkupplung 12 ein drehfest mit der Kurbelwelle 10 (Figur 8) einer Brennkraftmaschine verbundenes Gehäuse 60 mit einer linksseitig einer Grundplatte 61 des Gehäuses angeordneten ersten Kupplungsscheibe 62 einer ersten Kupplung K1 (Figur 8) und einer rechtsseitig der Grundplatte 61 angeordneten Kupplungsscheibe 64 einer zweiten Kupplung K2 (Figur 8). Im Folgenden wird nur die Betätigung der rechtsseitigen Kupplungsscheibe 64 näher erläutert. Die Betätigung der linksseitigen Kupplungsscheibe 62 erfolgt in entsprechender Weise.

Die Kupplungsscheibe 64 ist mit Hilfe einer Andrückplatte 66 in reibschlüssige Anlage an die Grundplatte 61 drückbar, so dass von dem Gehäuse 60 über die Kupplungsscheibe 64 Drehmoment auf die zweite Eingangswelle 18 (Figur 8) des Doppelkupplungsgetriebes übertragbar ist. Zur axialen Verschiebung der Andrückplatte 66 dient ein tellerfederartig ausgebildeter Kupplungshebel 68, der sich zwischen dem Gehäuse 60 und der Andrückplatte 66 abstützt und derart geformt ist, dass er die Kupplung selbsttätig in Offenstellung bewegt.

Zum Bewegen des Kupplungshebels 68 derart, dass die Andrückplatte 66 die Kupplungsscheibe 64 gegen die Gehäusegrundplatte drängt, ist ein Übertragungsglied 70 vorgesehen, das sich an einer Seite über ein Lager an dem Kupplungshebel 68 abstützt und an seinem anderen Ende in Anlage an einem Betätigungshebel 72 ist.

Der Betätigungshebel 72 liegt an einer Rolle 74 an, gegen die er von einer Feder 76 angepresst wird, die sich an einem maschinenfesten Anschlag 78 abstützt.

Die Rolle 74 ist an einer Spindelmutter 80 gelagert, die in Gewindeeingriff mit einer Spindel 82 ist, die von einem Elektromotor 84 drehangetrieben wird. Zur Erfassung der Drehstellung eines sich bei Betätigung des Elektromotors 84 drehenden Bauteils ist ein Inkrementsensor 86 vorgesehen, der mit einem Eingang 44 der elektronischen Steuereinrichtung 42 (Figur 8) verbunden ist.

Zum Betätigen des Kupplungshebels 68 dreht der Elektromotor die Spindel 82, längs der sich dadurch die Spindelmutter 80 linear bewegt, wodurch sich die Rolle 74 längs des Betätigungshebels 72 bewegt und diesen entsprechend der Neigung, die die Anlagefläche des Betätigungshebels 72 relativ zur Bewegungsrichtung der Rolle 74 hat, verschwenkt.

Die gesamte Anordnung ist derart, dass der tellerfederartig ausgebildete Kupplungshebel 68 aus einer geschlossenen Stellung der Kupplung in Folge seiner Eigenkraft das Übertragungsglied 70 nach rechts in die in Figur 1 gezeigte Stellung bewegt, wobei bei einer Verschwenkung des Betätigungshebels 72 in Gegenuhrzeigerrichtung das Leerlaufmoment des Elektromotors 84 überdrückt wird und sich die Rolle 74 unter Drehung der Spindel 82 aufwärts bewegt. Die Kupplung wird somit in ihre Schließstellung gedrückt und nimmt selbsttätig ihre Offenstellung ein.

Figur 2 verdeutlicht die Kraftverhältnisse am

Betätigungshebel 72.

$F_1$ bezeichnet die Kraft, die von der Feder 76 auf den Betätigungshebel 72 ausgeübt wird. $F_2$ bezeichnet die vom Übertragungsglied 70 her auf den Betätigungshebel 72 wirkende Kraft. L ist der Abstand zwischen den Wirklinien der Kräfte. x ist der Abstand des Berührungspunktes zwischen der Rolle 74 und dem Betätigungshebel 72 von der Wirklinie der Kraft $F_1$.

Es gilt:

$$F_2 \cdot (L-x) = F_1 \cdot x$$

Im stromlosen Zustand des Elektromotors 84 stellt sich das System unter Wirkung der Kraft des Kupplungshebels 68 in die dargestellte Stellung.

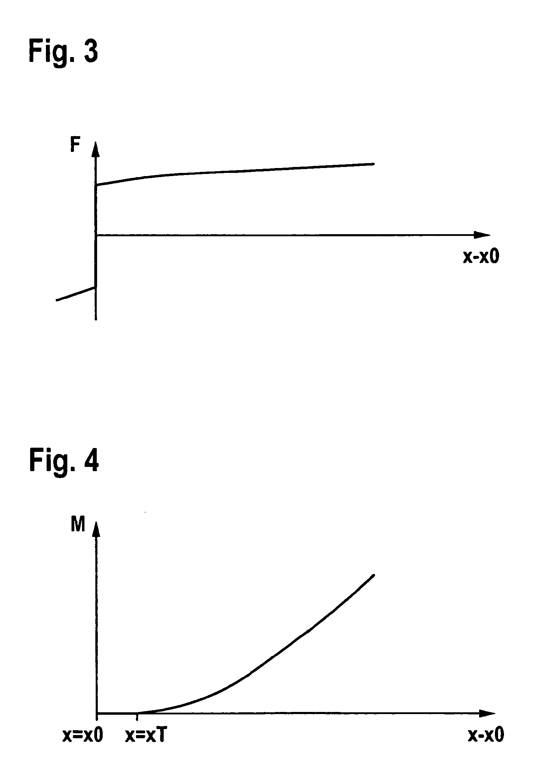

Für die auf die Spindelmutter 80 von der Spindel 82 aufzubringende Kraft gilt die in Figur 3 dargestellte Beziehung, wobei F die auf die Spindelmutter 80 aufzubringende Axialkraft darstellt und die Abszisse (x-x0) darstellt, wobei x0 den Wert von x im stromlosen Zustand angibt, d.h. bei offener Kupplung.

Figur 4 gibt das übertragbare Kupplungsmoment M in Abhängigkeit von x-x0 an. xT ist der Tastpunkt der Kupplung, in dem die Momentenübertragung beginnt.

Wie aus Figur 3 ersichtlich, gibt der Punkt x=x0 die Stellbereichsgrenze an, bei deren Überfahren sich die Richtung der von der Spindelmutter 80 aufzubringenden Kraft ändert und sich entsprechend das vom Elektromotor 84 aufzubringende Drehmoment ändert. Der Stellbereich der Spindelmutter 80 könnte durch einen Anschlag begrenzt werden, gegen den sich die Spindelmutter 80 gemäß Figur 1 nach oben bewegt. Eine Referenzierung kann dadurch erfolgen, dass der Zählstand des Inkrementalsensors 86 ermittelt wird, wenn sich die Spindelmutter 80 beim Öffnen der Kupplung gegen einen nicht dargestellten Anschlag bewegt oder aber die von der Spindelmutter 80 aufzubringende Kraft (entsprechend dem vom Elektromotor 84 aufzubringenden Drehmoment) durch 0 geht.

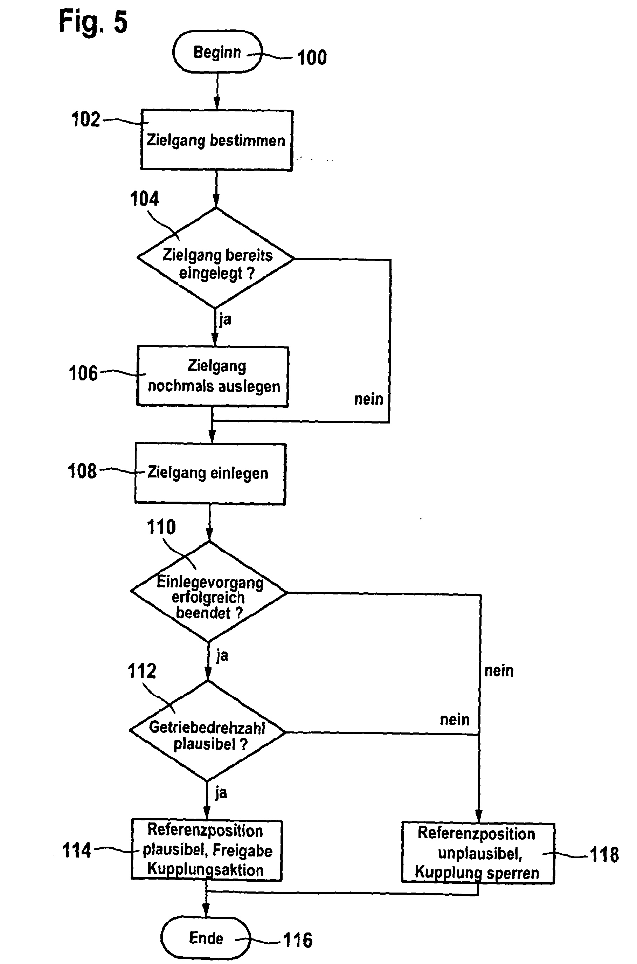

Im Folgenden wird eine im Anschluss an eine Referenzierung durchzuführende Plausibilisierung bzw. Absicherung der Referenzierung anhand des Flussdiagramms gemäß Figur 5 erläutert. Eine Plausibilisierung der Referenzposition ist zweckmäßig, da dadurch die Möglichkeit ausgeschlossen werden kann, dass ein unerwarteter Anschlag in Richtung Öffnen die Aktoreinrichtung bzw. den Elektromotor 84 in einer anderen Position als x=x0 zum Stehen gebracht hat oder aber, falls ohne Anschlag gearbeitet wird, dass ein Fehler im System, beispielsweise ein Bruch der Tellerfeder des Kupplungshebels 68 erkannt wird, wodurch die Kraft zum Bewegen der Spindelmutter Null würde, was eine fehlerhafte Referenzierung nach sich ziehen würde.

Sei angenommen, dass im Schritt 100 ein Überprüfungsprogramm startet. Im Schritt 102 wird ein Zielgang bestimmt, der in dem das der betrachteten Kupplung entsprechenden Teilgetriebe (Figur 8) des Doppelkupplungsgetriebes eingelegt werden soll.

Im Schritt 104 wird bestimmt, ob der Zielgang bereits eingelegt ist. Ist dies der Fall, so wird der Zielgang im Schritt 106 ausgelegt, um dann im Schritt 108 nach einer kurzen Wartezeit von beispielsweise 0,1 Sekunden wieder eingelegt zu werden.

Wenn im Schritt 104 festgestellt wird, dass der Zielgang nicht eingelegt wird, geht das System direkt zum Schritt 108. Wenn im Schritt 110 anschließend festgestellt wird, dass der Zielgang erfolgreich eingelegt wurde, d.h. dass der jeweilige Getriebeaktor seine Endlage erreicht, so ist davon auszugehen, dass die Kupplung offen ist, die Kupplungsaktorik sich also zwischen x0 und xT befindet, d.h. dass die Referenzierung erfolgreich war.

Eine weitere Sicherheit bei der Prüfung kann dadurch erreicht werden, dass im Schritt 112 überprüft wird, ob die Eingangswelle 18 die zu der Übersetzung des Zielgangs entsprechende, von der Fahrzeuggeschwindigkeit abhängige Größe hat.

Ist in den Schritten 110 und 112 jeweils ein Ja festgestellt worden, so schreitet das System zum Schritt 114 weiter, in dem die Plausibilität der bei der vorherigen Referenzierung ermittelten Referenzposition festgestellt wird und die Kupplung für einen weiteren Betrieb freigegeben wird. Anschließend wird der Überprüfungsvorgang im Schritt 116 beendet.

Wird in einem der Schritte 110 oder 112 ein Fehler festgestellt, so wird im Schritt 118 die Referenzposition als unplausibel bewertet und der weitere Betrieb der Kupplung gesperrt.

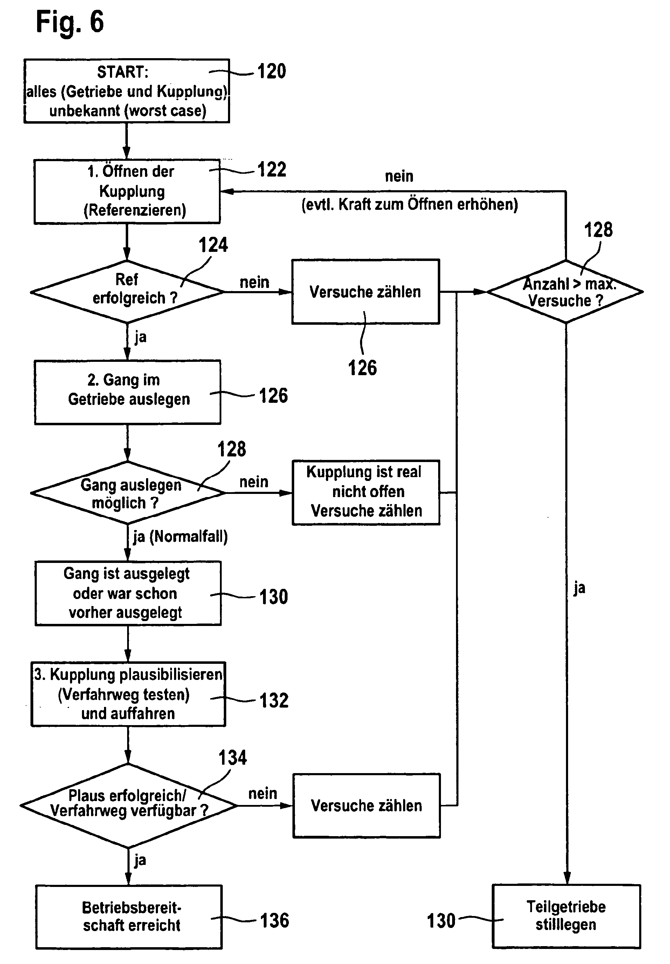

Anhand der Figur 6 wird eine weitere Möglichkeit erläutert, eine Referenzierung der Kupplungsaktorik abzusichern.

Sei angenommen, dass das System beispielsweise nach einem Reset im Schritt 120 startet, wobei nach einem Reset sowohl die Absolutposition der Getriebeaktorik als auch der der Kupplungsaktorik unbekannt sein kann.

Im Schritt 122 wird die Kupplung referenziert, indem beispielsweise der Elektromotor oder ein sonstiger Aktor in der Kupplungsaktorik nach geringer Betätigung in Schließrichtung außer Betrieb gesetzt wird und überprüft wird, ob die Kupplungsaktorik sich anschließend zurück und gegebenenfalls gegen einen Anschlag bewegt. Im Schritt 124 wird überprüft, ob sich die Kupplung bzw. die Spindelmutter 80 der Figur 2 zurück und gegebenenfalls gegen einen Anschlag bewegt hat (die Drehung des Elektromotors zum Stillstand gekommen ist). Ist dies nicht der Fall, so erfolgt ein weiterer Versuch, die Kupplung im dargestellten Beispiel durch Öffnen zu referenzieren, wobei im Schritt 126 die Anzahl der jeweiligen Versuche gezählt wird und beim jeweiligen Versuch beispielsweise die Kupplung zusätzlich durch entsprechende Beaufschlagung des Elektromotors mit elektromotorischer Hilfe geöffnet und die Spindelmutter gegen den Anschlag bewegt werden kann. Wenn im Schritt 128 festgestellt wird, dass eine vorbestimmte Anzahl erfolgloser Referenzierungsversuche stattgefunden hat, wird das entsprechende Teilgetriebe des Doppelkupplungsgetriebes im Schritt 130 nicht mehr betätigt.

Wenn der Schritt 124 erfolgreich abgeschlossen wurde, d.h. davon ausgegangen werden kann, dass die Kupplung offen ist, wird im Schritt 126 versucht, einen in dem betroffenen Teilgetriebe eingelegten Gang auszulegen. Wenn im Schritt 128 festgestellt wird, dass der Gang erfolgreich ausgelegt wurde, beispielsweise die Getriebeaktorik eine vorbestimmte Stellung erreicht hat oder die Drehzahl der zugehörigen Eingangswelle sich in vorbestimmter Weise ändert, geht das System zum Schritt 130 weiter, bei dem davon ausgegangen wird, dass in dem Getriebe kein Gang eingelegt ist.

Im Schritt 132 wird anschließend die Kupplung voll geschlossen und der dabei durchfahrene Verfahrweg festgestellt, beispielsweise aus dem anfänglichen Stand des Inkrementzählers 86 und dessen Endstand beim Erreichen der voll geschlossenen Stellung der Kupplung. Dabei kann die Drehzahl des Elektromotors bzw. die Verfahrgeschwindigkeit der Aktorik begrenzt werden oder im Übertragungsweg zwischen Elektromotor und Spindel eine Rutschkupplung vorgesehen sein, um die Aktorik vor einer Überlastung zu schützen, falls der gesamte Verfahrweg nicht zur Verfügung steht. Wenn im Schritt 134 festgestellt wird, dass der vorgesehene Verfahrweg verfügbar ist, wird dies als Plausibilisierung der Referenzierung (Schritt 124) gewertet, so dass in Schritt 136 auf normalen Kupplungsbetrieb übergegangen wird. Bei Erfolglosigkeit der Schritte 128 oder 134, d.h. möglicherweise nicht erfolgreicher Referenzierung, geht das System jeweils zum Schritt 122 zurück, wobei die Anzahl der Versuche gezählt wird und das Teilgetriebe im Schritt 130 stillgelegt wird, wenn die Anzahl eine vorbestimmte Zahl überschreitet. Dabei können die Versuche insgesamt gezählt werden, d.h. die Anzahl der erfolglosen Schritte 124, 128 und 134 kann addiert werden.

Es versteht sich, dass nach einer vermeintlich erfolgreichen Referenzierung im Schritt 124 die Stellung der Kupplungsaktorik nicht verändert werden darf, damit die Kupplung während der nachfolgenden Schritte beispielsweise nicht geschlossen wird.

Wenn im Schritt 126 bzw. 128 festgestellt wird, dass ein Gang ausgelegt werden kann, kann dies für ein Referenzieren der Getriebeaktorik genutzt werden. Wenn die Kupplung dabei nicht offen ist, sollte das Einlegen eines Ganges nicht möglich sein, was ohne weiteres festgestellt werden kann.

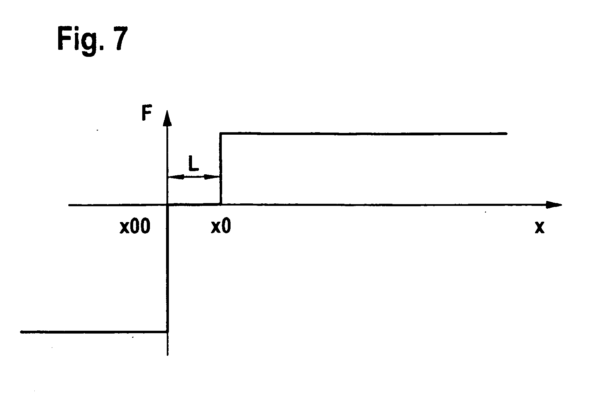

Im Folgenden wird anhand der Figur 7 eine weitere Möglichkeit zur Plausibilisierung bzw. Überprüfung einer Referenzierung erläutert:

Die Kurve der Figur 7 entspricht etwa der Figur 3 mit dem Unterschied, dass sich die Richtung der auf die Spindelmutter 80 aufzubringenden Kraft bei geöffneter Kupplung nicht sprunghaft ändert sondern über einen Bereich L zwischen einem Wert x00 und x0 näherungsweise 0 ist und erst dann sprunghaft zunimmt, um die Kupplung zu schließen. Dies wird durch eine entsprechende Gestaltung der Anlagen- bzw. Rampenfläche erreicht, an der der Betätigungshebel 72 in Anlage an der Rolle 74 ist. Es versteht sich, dass die Kraft zum Schließen der Kupplung und auch die Kraft, mit der der Betätigungshebel 72 über die Öffnungsstellung hinaus bewegt werden kann, nicht konstant sein müssen. In jedem Fall muss die Schließkraft über einem vorbestimmten Wert liegen, damit sichergestellt ist, dass sich die Kupplung selbsttätig in Offenstellung bewegt.

Die Gestaltung des Betätigungshebels 72 derart, dass sich ein Kraftverlauf gemäß Figur 7 ergibt, kann folgendermaßen zum Plausibilisieren genutzt werden:

Die Kupplung bewegt sich selbsttätig (Elektromotor stromlos) aus der Schließstellung in die Position x0, die zum Referenzieren benutzt wird. Für eine Plausibilisierung wird überprüft, ob sich die Spindelmutter 80 bei Beaufschlagung des Elektromotors mit unterhalb einem vorbestimmten Wert liegendem Strom, d.h. sehr kleinem Drehmoment, um die Strecke L, d.h. zwischen x0 und x00 bewegen lässt. Ist dies der Fall, so wird die Referenzierung als plausibel, d.h. richtig angenommen. Zusätzlich kann überprüft werden, ob der Elektromotor in jeder der Zwischenstellungen zwischen x0 und x00 bei Stromabschaltung stehen bleibt, d.h. von der Kupplung her keine Kraft auf ihn einwirkt, die ihn verstellt.

Die beispielhaft beschriebenen Ausführungsformen und Vorrichtungen können in vielfältiger Weise abgeändert werden. Die Kupplung muss nicht zwangsläufig Bestandteil eines Doppelkupplungsgetriebes sein. Die Betätigung der Kupplung kann hydraulisch oder in anderer Weise erfolgen. Die Kupplung kann eine Kupplung sein, die sich selbsttätig in Schließstellung bewegt usw.

**Bezugszeichenliste**

| | |
|---|---|
| 10 | Kurbelwelle |
| 12 | Doppelkupplung |
| 14 | erste Eingangswelle |
| 16 | Doppelkupplungsgetriebe |
| 18 | zweite Eingangswelle |
| 20 | Ausgangswelle |
| 22 | Ausgangswelle |
| 24 | Ausgangsritzel |
| 26 | Ausgangsritzel |
| 28 | Schaltmuffe |
| 30 | Schaltmuffe |
| 32 | Schaltmuffe |
| 34 | Schaltmuffe |
| 36 | erstes Teilgetriebe |
| 38 | zweites Teilgetriebe |
| 40 | Schaltschiene |
| 42 | elektronische Steuereinrichtung |
| 44 | Eingänge |

| 46 | Kupplungsaktor |
|---|---|
| 48 | Kupplungsaktor |
| 50 | Schaltaktor |
| 52 | Schaltaktor |
| 54 | Schaltaktor |
| 56 | Schaltaktor |
| 60 | Gehäuse |
| 61 | Grundplatte |
| 62 | Kupplungsscheibe |
| 64 | Kupplungsscheibe |
| 66 | Andrückplatte |
| 68 | Kupplungshebel |
| 70 | Übertragungsglied |
| 72 | Betätigungshebel |
| 74 | Rolle |
| 76 | Feder |
| 78 | Anschlag |
| 80 | Spindelmutter |
| 82 | Spindel |
| 84 | Elektromotor |
| 86 | Inkrementsensor |
| 100 bis 136 | Verfahrensschritte |
| F | Axialkraft |
| $F_1$ | Kraft |
| $F_2$ | Kraft |
| K1 | Kupplung |
| K2 | Kupplung |
| L | Abstand |
| M | Kupplungsmoment |
| R | Gang |
| x | Abstand |
| xT | Tastpunkt |

**Patentansprüche**

1. Verfahren zum Absichern einer Referenzierung einer Inkrementalwegmessung bei einer in einem Fahrzeugantriebsstrang enthaltenen Kupplungsaktorik (46, 48), bei welchem Verfahren bei nach einer Referenzierung in einer vorbestimmten Stellung befindlicher Kupplungsaktorik (46, 48) eine Getriebeaktorik (50, 52, 54, 56) zum Schalten eines in dem Antriebsstrang enthaltenen Schaltgetriebes (16) in vorbestimmter Weise betätigt wird, **dadurch gekennzeichnet, dass** aus einer auf eine Referenzierung folgenden Betätigung der Getriebeaktorik oder einer auf eine Referenzierung folgenden Betätigung der Kupplungsaktorik die Referenzierung als einwandfrei oder fehlerhaft klassifiziert wird, wobei

   - die Kupplungsaktorik zum Referenzieren in eine dem voll geöffneten Zustand der Kupplung entsprechende Stellung bewegt wird, mittels der Getriebeaktorik ein Gang eingelegt (108) wird und die Einlegbarkeit des Ganges als einwandfreie Referenzierung gewertet wird, wobei beim Einlegen des Ganges überprüft wird, ob sich die Eingangswelle des Getriebes mit einer der Übersetzung des eingelegten Ganges entsprechenden Drehzahl dreht (112)
und/oder
   - die Kupplungsaktorik zum Referenzieren in eine dem voll geöffneten Zustand der Kupplung entsprechende Stellung bewegt wird und nachfolgend überprüft wird, ob ein eingelegter Gang ausgelegt (126) werden kann und die Auslegbarkeit des Ganges als einwandfreie Referenzierung gewertet wird, wobei nach dem Auslegen des Ganges die Kupplungsaktorik derart betätigt wird, dass sie einen vorbestimmten maximalen Verfahrweg durchfährt (132) und das Vorhandensein dieses maximalen Verfahrwegs als einwandfreie Referenzierung gewertet wird (134).

2. Verfahren zum Absichern einer Referenzierung einer Inkrementalwegmessung bei einer in einem Fahrzeugantriebsstrang enthaltenen Kupplungsaktorik (46, 48), wobei die Kupplungsaktorik (46, 48) und die Kupplung (K1, K2) derart ausgebildet sind, dass im voll geöffneten Zustand der Kupplung von der Kupplungsaktorik über eine vorbestimmte Strecke (L) auf die Kupplung eine unterhalb eines vorbestimmten Wertes liegende Schwellkraft ausgeübt wird, bei welchem Verfahren die Kupplungsaktorik zum Referenzieren in eine dem voll geöffneten Zustand der Kupplung entsprechende Stellung bewegt wird, **dadurch gekennzeichnet, dass** anschließend überprüft wird, ob die Kupplungsaktorik über die vorbestimmte Strecke bewegbar ist, ohne dass die Schwellkraft überschritten wird, und die Bewegbarkeit der Kupplungsaktorik über die vorbestimmte Strecke (L) ohne Überschreiten der Schwellkraft als einwandfreie Referenzierung gewertet wird.

3. Vorrichtung zum Absichern einer Referenzierung einer Inkrementalwegmessung bei einer in einem Fahrzeugantriebsstrang enthaltenen Kupplungsaktorik, welcher Fahrzeugantriebsstrang einen Antriebsmotor, ein von einer Getriebeaktorik (50, 52, 54, 56) betätigbares Schaltgetriebe (16), eine zwischen dem Antriebsmotor und dem Getriebe angeordnete, von der Kupplungsaktorik (46, 48) betätigte Kupplung (K1, K2) und eine elektronische Steuereinrichtung (42) enthält, die die Kupptungsaktörik und die Getriebeaktorik in Abhängigkeit von von Sensoren erfassten Betriebsparametern des Antriebsstrangs steuert, wobei die Steuereinrichtung die Kupplungsaktorik und die Getriebeaktorik entsprechend einem Verfahren nach einem der Ansprüche 1 oder 2 steuert.

4. Vorrichtung nach Anspruch 3, wobei die Kupplungsaktorik einen Betätigungshebel (72) enthält, der um ein von einem Aktor (84) bewegbares Stützglied (74) schwenkbar ist und von einer Feder (76) in Anlage an das Stützglied und ein Betätigungselement (70) der Kupplung gedrängt wird.

**5.** Vorrichtung nach Anspruch 4, wobei das Stützglied (74) linear etwa in Längsrichtung des Betätigungshebels (72) bewegbar ist und der Betätigungshebel in seiner Längsrichtung unterschiedlich zur Bewegbarkeitsrichtung des Stützgliedes geneigt ist.

**6.** Vorrichtung nach Anspruch 4 oder 5, wobei die Kupplung als sich selbsttätig öffnende Kupplung ausgebildet ist.

**7.** Vorrichtung nach einem der Ansprüche 3 bis 6, wobei die Kupplung eine der beiden Kupplungen (K1, K2) eines Doppelkupplungsgetriebes (16) ist und das Getriebe eines von zwei Teilgetrieben des Doppelkupplungsgetriebes ist.

## Claims

**1.** Method for ensuring the referencing of an incremental distance measurement in a clutch actuator (46, 48) contained in a vehicle drive train, in which method, when the clutch actuator (46, 48) is located in a predetermined position after referencing, a transmission actuator (50, 52, 54, 56) is activated in a predetermined way in order to shift a manual transmission (16) which is contained in the drive train, **characterized in that** the referencing is classified as satisfactory or faulty on the basis of activation of the transmission actuator which follows referencing or on the basis of activation of the clutch actuator which follows referencing, wherein

- the clutch actuator is moved for the purpose of referencing into a position corresponding to the fully opened state of the clutch, a gearspeed is engaged (108) by means of the transmission actuator, and the possibility of engaging the gearspeed is evaluated as satisfactory referencing, wherein, when the gearspeed is engaged, it is checked whether the input shaft of the transmission rotates at a rotational speed corresponding to the transmission ratio of the engaged gearspeed (112)
and/or
- the clutch actuator is moved for the purpose of referencing to a position corresponding to the fully opened state of the clutch and it is subsequently checked whether an engaged gearspeed can be disengaged (126) and the possibility of disengaging the gearspeed is evaluated as satisfactory referencing, wherein, after the disengagement of the gearspeed, the clutch actuator is activated in such a way that it travels a predetermined maximum displacement distance (132), and the presence of this maximum displacement distance is evaluated as satisfactory referencing (134).

**2.** Method for ensuring the referencing of an incremental distance measurement in a clutch actuator (46, 48) which is contained in a vehicle drive train, wherein the clutch actuator (46, 48) and the clutch (K1, K2) are embodied in such a way that in the fully opened state of the clutch a threshold force, which is below a predetermined value, is applied to the clutch by the clutch actuator over a predetermined distance (L), in which method the clutch actuator is moved for the purpose of referencing into a position corresponding to the fully opened state of the clutch, **characterized in that** it is subsequently tested whether the clutch actuator can be moved over the predetermined distance without the threshold force being exceeded, and the mobility of the clutch actuator over the predetermined distance (L) without exceeding the threshold force is evaluated as satisfactory referencing.

**3.** Device for ensuring a referencing of an incremental distance measurement in a clutch actuator which is contained in a vehicle drive train, which vehicle drive train contains a drive motor, a manual transmission (16) which can be activated by a transmission actuator (50, 52, 54, 56), a clutch (K1, K2) which is arranged between the drive motor and the transmission and is activated by the clutch actuator (46, 48), and an electronic control device (42) which controls the clutch actuator and the transmission actuator as a function of the operating parameters of the drive train which are sensed by sensors, wherein the control device controls the clutch actuator and the transmission actuator in accordance with a method according to one of Claims 1 and 2.

**4.** Device according to Claim 3, wherein the clutch actuator contains an activation lever (72) which can be pivoted about the support element (74) which can be moved by an actuator (84), and is forced by a spring (76) to abut against the support element and against an activation element (70) of the clutch.

**5.** Device according to Claim 4, wherein the support element (74) can be moved linearly approximately in the longitudinal direction of the activation lever (72), and the activation lever is inclined differently in its longitudinal direction with respect to the direction in which the support element can moved.

**6.** Device according to Claim 4 or 5, wherein the clutch is embodied as an automatically opening clutch.

**7.** Device according to one of Claims 3 to 6, wherein the clutch is one of the two clutches (K1, K2) of a double clutch transmission (16), and the transmission is one of two component transmissions of a double clutch transmission.

## Revendications

1. Procédé pour assurer un référencement d'une mesure de course incrémentale sur un actionneur d'accouplement (46, 48) qui se trouve dans une chaîne de transmission d'un véhicule, procédé selon lequel, sur un actionneur d'accouplement (46, 48) qui se trouve dans une position prédéfinie après un référencement, un actionneur de boîte de vitesses (50, 52, 54, 56) est actionné d'une manière prédéfinie pour changer le rapport d'une boîte de vitesses (16) qui se trouve dans la chaîne de transmission, **caractérisé en ce que** le référencement est classifié comme parfait ou comme erroné à partir d'un actionnement de l'actionneur de boîte de vitesses qui suit un référencement ou d'un actionnement de l'actionneur d'accouplement qui suit un référencement,

   - l'actionneur d'accouplement étant, pour le référencement, déplacé dans une position correspondant à l'état complètement ouvert de l'accouplement, un rapport étant engagé (108) au moyen de l'actionneur de boîte de vitesses et la possibilité d'engager le rapport étant interprétée comme un référencement parfait, un contrôle ayant lieu au moment d'engager le rapport pour vérifier si l'arbre d'entrée de la boîte de vitesses tourne à une vitesse de rotation (112) correspondant au rapport de démultiplication du rapport engagé,
   et/ou
   - l'actionneur d'accouplement étant, pour le référencement, déplacé dans une position correspondant à l'état complètement ouvert de l'accouplement et un contrôle ayant ensuite lieu pour vérifier s'il est possible de sortir un rapport engagé (126) et la possibilité de sortir le rapport étant interprétée comme un référencement parfait, l'actionneur d'accouplement étant actionné après la sortie du rapport de telle sorte qu'il parcourt une course de déplacement (132) maximale prédéfinie et la présence de cette course de déplacement maximale étant interprétée comme un référencement parfait (134).

2. Procédé pour assurer un référencement d'une mesure de course incrémentale sur un actionneur d'accouplement (46, 48) qui se trouve dans une chaîne de transmission d'un véhicule, l'actionneur d'accouplement (46, 48) et l'accouplement (K1, K2) étant configurés de telle sorte que lorsque l'accouplement est à l'état complètement ouvert, l'actionneur d'accouplement exerce sur l'accouplement sur un trajet prédéfini (L) une force de seuil inférieure à une valeur prédéfinie, procédé selon lequel l'actionneur d'accouplement, pour le référencement, est déplacé dans une position correspondant à l'état complètement ouvert de l'accouplement, **caractérisé en ce qu'**un contrôle est ensuite effectué pour vérifier si l'actionneur d'accouplement peut être déplacé sur le trajet prédéfini sans que la force de seuil soit dépassée et la capacité à déplacer l'actionneur d'accouplement sur le trajet prédéfini (L) sans dépasser la force de seuil est interprétée comme un référencement parfait.

3. Dispositif pour assurer un référencement d'une mesure de course incrémentale sur un actionneur d'accouplement qui se trouve dans une chaîne de transmission d'un véhicule, ladite chaîne de transmission d'un véhicule contenant un moteur d'entraînement, une boîte de vitesses (16) qui peut être actionnée par un actionneur de boîte de vitesses (50, 52, 54, 56), un accouplement (K1, K2) disposé entre le moteur d'entraînement et la boîte de vitesses, actionné par l'actionneur d'accouplement (46, 48), et un dispositif de commande électronique (42) qui commande l'actionneur d'accouplement et l'actionneur de boîte de vitesses en fonction de paramètres de fonctionnement de la chaîne de transmission détectés par des capteurs, le dispositif de commande commandant l'actionneur d'accouplement et l'actionneur de boîte de vitesses conformément à un procédé selon l'une des revendications 1 ou 2.

4. Dispositif selon la revendication 3, l'actionneur d'accouplement contenant un levier d'actionnement (72) qui peut être basculé autour d'un élément d'appui (74) pouvant être déplacé par un actionneur (84) et qui est poussé par un ressort (76) en appui contre l'élément d'appui et un élément d'actionnement (70) de l'accouplement.

5. Dispositif selon la revendication 4, l'élément d'appui (74) pouvant être déplacé de manière linéaire approximativement dans le sens longitudinal du levier d'actionnement (72) et le levier d'actionnement étant incliné différemment dans son sens longitudinal par rapport au sens de mobilité de l'élément d'appui.

6. Dispositif selon la revendication 4 ou 5, l'accouplement étant configuré comme un accouplement à ouverture automatique.

7. Dispositif selon l'une des revendications 3 à 6, l'accouplement étant l'un des deux accouplements (K1, K2) d'une boîte de vitesses à double accouplement (16) et la boîte de vitesses étant l'une des deux boîtes de vitesses partielles d'une boîte de vitesses à double accouplement.

# Fig. 1

60

66

61

78

84

86

74

80

82

76

12

72

62    64    68    18    70

# Fig. 2

74

$F_1$

x

L

72

$F_2$

## Fig. 3

## Fig. 4

# Fig. 5

Beginn — 100

102 — Zielgang bestimmen

104 — Zielgang bereits eingelegt ?

ja

106 — Zielgang nochmals auslegen

nein

108 — Zielgang einlegen

110 — Einlegevorgang erfolgreich beendet ?

ja

112 — Getriebedrehzahl plausibel ?

nein

nein

ja

114 — Referenzposition plausibel, Freigabe Kupplungsaktion

Referenzposition unplausibel, Kupplung sperren — 118

Ende — 116

# Fig. 6

START: 120
alles (Getriebe und Kupplung)
unbekannt (worst case)

1. Öffnen der 122
Kupplung
(Referenzieren)

nein
(evtl. Kraft zum Öffnen erhöhen)

124
Ref
erfolgreich ?

nein → Versuche zählen → 128
Anzahl > max.
Versuche ?

126

ja

2. Gang im 126
Getriebe auslegen

128
Gang auslegen
möglich ?

nein → Kupplung ist real
nicht offen
Versuche zählen

ja (Normalfall)

Gang ist ausgelegt
oder war schon 130
vorher ausgelegt

3. Kupplung plausibilisieren
(Verfahrweg testen) 132
und auffahren

134
Plaus erfolgreich/
Verfahrweg verfügbar ?

nein → Versuche zählen

ja

ja

Betriebsbereitschaft erreicht 136

130 Teilgetriebe
stilllegen

13

# Fig. 7

# Fig. 8

(Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4433825 C2
- DE 10027330 A1
- EP 1614922 A2
- GB 2310261 A
- WO 03008779 A2